(19) Europäisches Patentamt
European Patent Office
Office européen des brevets

(11) **EP 2 651 159 A1**

(12) **EUROPEAN PATENT APPLICATION**
published in accordance with Art. 153(4) EPC

(43) Date of publication:
**16.10.2013 Bulletin 2013/42**

(51) Int Cl.:
*H04W 24/10* (2009.01)  *H04W 16/26* (2009.01)
*H04W 16/28* (2009.01)  *H04W 72/12* (2009.01)

(21) Application number: **11846310.8**

(22) Date of filing: **09.12.2011**

(86) International application number:
**PCT/JP2011/078579**

(87) International publication number:
**WO 2012/077791 (14.06.2012 Gazette 2012/24)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.12.2010  JP 2010276183**

(71) Applicant: **NTT DOCOMO, INC.**
**Chiyoda-ku**
**Tokyo**
**100-6150 (JP)**

(72) Inventors:
• **NAGATA, Satoshi**
**Tokyo 100-6150 (JP)**
• **KUSUME, Katsutoshi**
**Tokyo 100-6150 (JP)**
• **TAOKA, Hidekazu**
**Tokyo 100-6150 (JP)**
• **WEITKEMPER, Petra**
**Tokyo 100-6150 (JP)**

(74) Representative: **HOFFMANN EITLE**
**Patent- und Rechtsanwälte**
**Arabellastrasse 4**
**81925 München (DE)**

(54) **WIRELESS RELAY STATION, WIRELESS BASE STATION, AND WIRELESS COMMUNICATION METHOD**

(57)   In order to improve user throughout and increase the capacity in type II relay, a radio relay station apparatus according to the present invention has a channel quality information controlling section configured to measure channel quality of a mobile terminal apparatus, calculate a channel quality reduction value to reduce for the mobile terminal apparatus due to interference from other mobile terminal apparatuses, and select a predetermined mobile terminal apparatus from the other mobile terminal apparatuses; and a transmitting section configured to transmit information of the channel quality of the mobile terminal apparatus, information of the predetermined mobile terminal apparatus selected and the channel quality reduction value to a radio base station apparatus.

FIG. 14

EP 2 651 159 A1

## Description

Technical Field

The present invention relates to a radio relay station apparatus, a radio base station apparatus and a radio communication method for relay transmission.

Background Art

In 3GPP (3rd Generation Partnership Project), standardization of LTE- Advanced (LTE (Long Term Evolution)-A) has been fostered as the 4th generation mobile communication system to realize further higher- speed and larger-capacity communications than LTE which is development standard in the 3rd generation mobile communication system. LTE- A has important issues to improve throughputs of cell- edge users as well as to realize higher- speed and larger-capacity communications, and as a way of this, study has been made of a relay  transmission technique for relaying radio communications between a radio base station apparatus and a mobile terminal apparatus. With use of this relay transmission technique, it is expected to extend the coverage effectively in such a place that wired backhaul link is difficult to establish.

In the relay technique, there are type I relay (L3 relay) and type II relay (Advanced-L1 relay, Advanced-L2 relay). Type I relay is such a relay technique that a cell of a radio relay station apparatus (relay node: RN) has its own cell ID and the radio relay station apparatus transmits common/shared control signals for the own cell. Accordingly, the relay node acts as a radio base station apparatus for a mobile terminal apparatus (user terminal: UE). And, the relay node has a specific scheduler. Accordingly, type I relay makes a contribution to extension of a coverage via a radio backhaul link between the radio base station apparatus (Donor eNode B: DeNB) and the relay node RN. This type I relay has been standardized in LTE Release-10 (see Non Patent Literatures 1, 2).

On the other hand, type II relay is such a  relay technique that a cell of the relay node does not have its own cell ID and the relay node does not transmit cell-specific reference signals or control signals. In type II relay, DeNB allocates its own resources and allocates resources of the relay node (scheduling). Accordingly, type II relay makes a contribution to improvement of user throughput thereby to increase the capacity. This type II relay is expected to be standardized in Release-11 LTE or later. Note that L1 relay is a relay technique called booster or repeater, which is an AF (Amplifier and Forward) type relay technique in which downlink reception RF signals from a radio base station apparatus DeNB are power-amplified and transmitted to a mobile terminal UE. And, L2 relay is a DF (Decode and Forward) type relay technique in which downlink reception RF signals from the radio base station apparatus DeNB are demodulated and decoded, then, coded and modulated again and transmitted to the mobile terminal UE.

Citation List

Non-Patent Literature

Non-Patent Literature 1: 3GPP, TS36.216 (V10.0.0)
Non-Patent Literature 2: 3GPP, TS36.806 (V9.0.0)

Summary of the Invention

Technical Problem

In type II relay, as the radio base station apparatus DeNB and the relay node RN use the same frequency, it is possible to control interference relatively easily as compared with type I relay. Therefore, in type II relay, it is expected to further improve user throughput thereby to increase the capacity by coordination between the radio base station apparatus DeNB and the relay node RN.

The present invention was carried out in view of the foregoing and aims to provide a radio relay station apparatus, a radio base station apparatus and a radio communication method capable of improving the user throughput thereby to increase the capacity in type II relay.

Solution to Problem

The present invention provides a radio relay station apparatus comprising: a channel quality  information controlling section configured to measure channel quality of a mobile terminal apparatus, calculate a channel quality reduction value to reduce for the mobile terminal apparatus due to interference from other mobile terminal apparatuses, and select a predetermined mobile terminal apparatus from the other mobile terminal apparatuses; and a transmitting section configured to transmit information of the channel quality of the mobile terminal apparatus, information of the predetermined mobile terminal apparatus selected and the channel quality reduction value to a radio base station apparatus.

The present invention further provides a radio base station apparatus comprising: a channel quality information generating section configured to measure channel quality of each of a plurality of mobile terminal apparatuses and generate radio base station side channel quality information for the mobile terminal apparatus in consideration of interference from other mobile terminal apparatuses; a feedback information signal demodulating section configured to demodulate a feedback information signal received from a radio relay station apparatus; a scheduler  configured to select a mobile terminal apparatus to perform communication via a direct link and a mobile terminal apparatus to perform communication via a relay link based on the feedback information signal and the radio base station side channel quality information and to generate scheduling information; and a transmitting section configured to transmit the scheduling information to the radio relay station apparatus, wherein the feedback information signal is information including channel quality of a plurality of mobile terminal apparatuses in the radio relay station apparatus, a channel quality reduction value to reduce for each of the mobile terminal apparatuses due to interference from a predetermined mobile terminal apparatus and information about the predetermined mobile terminal apparatus.

The present invention further provides a radio communication method comprising the steps of: in a radio relay station apparatus, measuring channel quality of each of a plurality of mobile terminal apparatuses, calculating a channel quality reduction value to reduce for the mobile terminal apparatus due to interference from other mobile terminal  apparatuses and selecting a predetermined mobile terminal apparatus from the other mobile terminal apparatuses; and transmitting feedback signal information including the channel quality reduction value, information of the predetermined mobile terminal apparatus selected and information of the channel quality of the mobile terminal apparatuses to a radio base station apparatus; and in the radio base station apparatus, measuring channel quality of each of a plurality of mobile terminal apparatuses, and generating radio base station side channel quality information for the mobile terminal apparatus in consideration of interference from other mobile terminal apparatuses; selecting a mobile terminal apparatus to perform communication via a direct link and a mobile terminal apparatus to perform communication via a relay link based on the feedback signal information and the radio base station side channel quality information and generating scheduling information; and transmitting the scheduling information to the radio relay station apparatus.

Technical Advantage of the Invention

According to the present invention, it is possible to make appropriate control of interference between a mobile terminal apparatus that performs communication via a direct link and a mobile terminal apparatus that performs communication via a relay link. With this structure, it is possible to improve the user throughput and increase the capacity.

Brief Description of the Drawings

Fig. 1 is a diagram for explaining uplink CoMP reception;
Fig. 2 is a diagram for explaining a radio communication system using type II relay;
Fig. 3 is a diagram for explaining radio communication using type II relay;
Fig. 4 is a diagram for explaining a method of calculating a correction value of channel quality information;
Fig. 5 is a diagram for explaining radio communication using type II relay;
Fig. 6 is a diagram for explaining radio communication using type II relay;
Fig. 7 is a diagram for explaining a  beamforming direction when a radio relay station apparatus is equipped with a plurality of antennas;
Fig. 8 is a diagram for explaining a method for measuring CQI of a mobile terminal apparatus when the radio relay station apparatus is equipped with a plurality of antennas;
Fig. 9 is a diagram for explaining a method for measuring CQI of a mobile terminal apparatus when the radio relay station apparatus is equipped with a plurality of antennas;
Fig. 10 is a diagram for explaining a method for measuring CQI of a mobile terminal apparatus when the radio relay station apparatus is equipped with a plurality of antennas;
Fig. 11 is a diagram for explaining radio communication using type II relay;
Fig. 12 is a diagram for explaining radio communication using type II relay;
Fig. 13 is a diagram for explaining radio communication using type II relay;
Fig. 14 is a block diagram schematically illustrating a configuration of a radio relay station apparatus; and

Fig. 15 is a block diagram schematically illustrating a configuration of a radio base station apparatus.

Description of Embodiments

With reference to the accompanying drawings, embodiments of the present invention will be described in detail below. In the following description, DeNB, RN and UE in the figures denote a radio base station apparatus, a ratio relay station apparatus and a mobile terminal apparatus, respectively.

In order to improve user throughput to increase the capacity in type II relay, of importance is coordination between the radio base station apparatus DeNB and the radio relay station apparatus RN. The present inventors have noted CoMP (Coordinated Multi-Point transmission and reception) in considering coordination between the radio base station apparatus DeNB and the radio relay station apparatus RN.

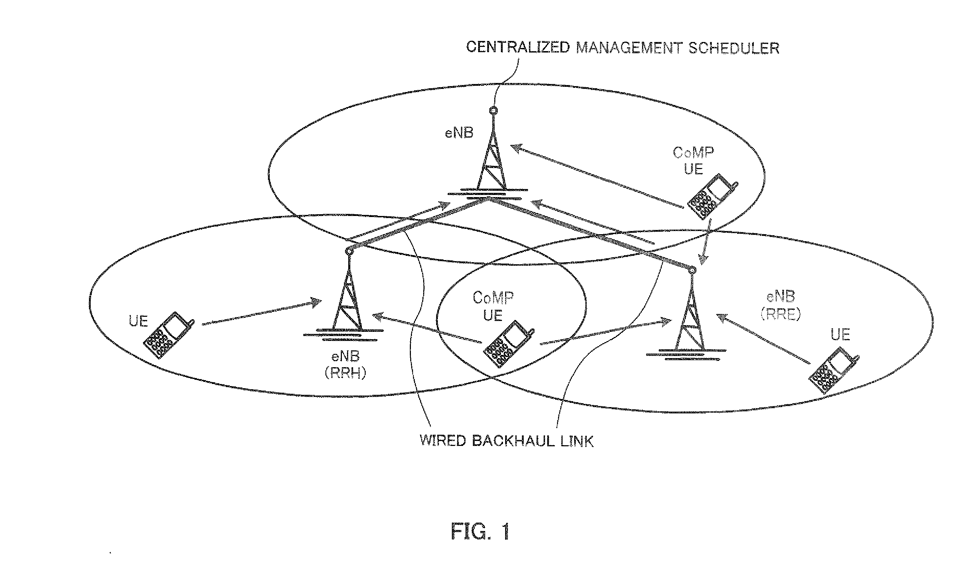

Fig. 1 is a diagram for explaining uplink CoMP reception. In Fig. 1, illustrated is a configuration of a remote base station (RRE: Remote Radio Equipment). In RRE configuration, a centralized eNB for performing baseband signal processing of a plurality of RREs and controlling them and each cell, that is, RRE are connected by an optical fiber (wired backhaul link). The centralized eNB has a centralized management scheduler to make centralized control of radio resources.

In such a structure, channel state information (CSI) and channel quality (CQI: Channel Quality Indicator) of all UE apparatuses are transmitted to the centralized eNB via wired backhaul links. In the centralized eNB, these CSI and CQI are used to make control of the radio resources, thereby to realize uplink CoMP reception of signals from cell-edge UE apparatuses (CoMP UE). In this way, in uplink CoMP, the centralized eNB and RRE apparatuses coordinate with each other by transmitting and receiving various information pieces with use of wired backhaul links.

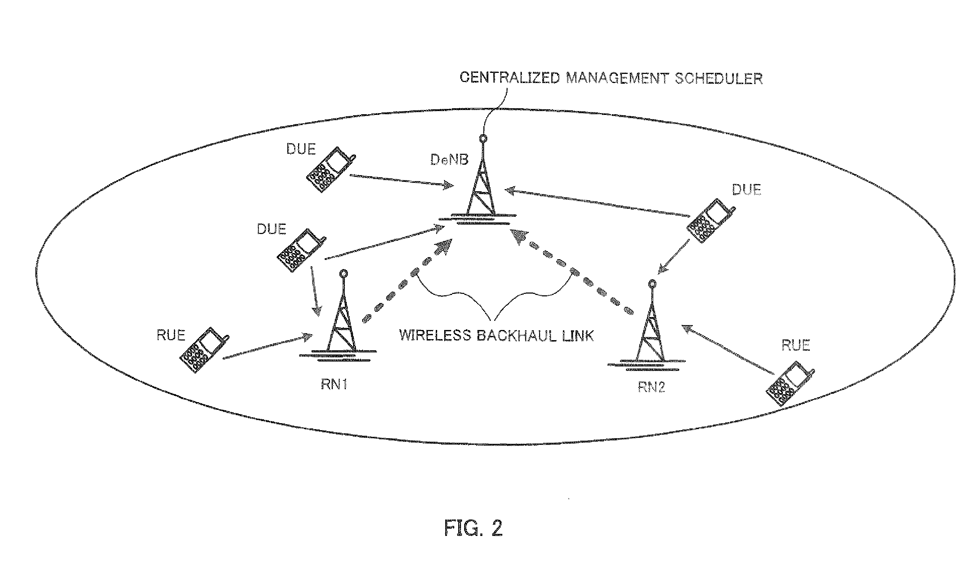

Fig. 2 is a diagram for explaining a radio communication system using type II relay. In the radio communication system illustrated in Fig. 2, radio relay station apparatuses RN1 and RN2 are provided in a cell formed by the radio base station apparatus DeNB. The radio relay station apparatuses RN1 and RN2 transmit, to the radio base station apparatus DeNB, CSI and CQIs of mobile terminals RUE (Relay UE) (hereinafter referred to as "relay terminal RUE") connected to the radio relay station apparatus, via radio backhaul links (broken lines). The radio relay station apparatuses RN1 and RN2 receive signals for relay terminals RUE from the radio base station apparatus DeNB. And, the radio relay station apparatuses RN1 and RN2 transmit and receive signals for the relay terminals RUE via the respective relay links. The radio base station apparatus DeNB transmits and receives signals to and from a mobile terminal DUE (Donor User Equipment, hereinafter referred to as "donor terminal DUE") that is connected to the radio base station apparatus, via a direct link.

In the radio communication system illustrated in Fig. 2, the radio base station apparatus DeNB has a centralized management scheduler and makes centralized control of radio resources of the radio relay station apparatuses RN1 and RN2 and the radio base station apparatus DeNB. In this way, also in the radio communication system illustrated in Fig. 2, it is possible to make coordination between the radio base station apparatus DeNB and each radio relay station apparatus RN. However, in this radio communication system, the amount of used radio resources varies from transmission/reception via a direct link between the donor terminal DUE and the radio base station apparatus DeNB to transmission/reception between a relay terminal RUE and the radio base station apparatus DeNB. That is, transmission and reception between the relay terminal RUE and the radio base station apparatus DeNB uses, as radio resources, a relay link between the relay terminal RUE and the radio relay station apparatus RN and a backhaul link between the radio relay station apparatus RN and the radio base station apparatus DeNB, which requires more radio resources than transmission and reception between the radio base station apparatus DeNB and the donor terminal DUE using radio resources only of the direct link between the donor terminal DUE and the radio base station apparatus DeNB.

Accordingly, in order to realize improvement of user throughput and increase in capacity by controlling interference efficiently, it is necessary to consider coordination between the radio base station apparatus DeNB and the radio relay station apparatus RN in view of usage of radio resources by both of communication using a relay link and communication using a direct link. In this regard, coordination between the radio base station apparatus DeNB and the radio relay station apparatus RN is different from uplink CoMP where a centralized eNB and a RRH coordinate with use of a wired backhaul link. Here, the radio resources are resources for radio communications and include time, frequency, space, code and so on.

Here, in the radio communication system using type II relay, it is considered that the radio base station apparatus assigns a mobile terminal apparatus that performs communication via a direct link and a mobile terminal apparatus that performs communication via a relay link to the same resource block. In this case, it becomes necessary to control interference between the mobile terminal apparatus that performs communication via the direct link and the mobile terminal apparatus that performs communication via the relay link, appropriately.

Selection of a mobile terminal apparatus that performs communication via a direct link and a mobile terminal apparatus that performs communication via a relay link is made based on channel quality ($CQI_{DeNB}$) information of each mobile terminal apparatus for the radio base station apparatus and channel quality ($CQI_{RN}$) information of each mobile terminal apparatus for the radio relay station apparatus.

More specifically, first, the radio base station apparatus measures channel quality ($CQI_{DeNB}$) of mobile terminal apparatuses (for example, UE#1 to UE#3) in a cell. In the same manner, the radio relay station apparatus measures channel quality ($CQI_{RN}$) of the mobile terminal apparatuses (for example, UE#1 to UE#3) in the cell. The channel quality (CQI) of each mobile terminal apparatus can be measured based on a reference signal (SRS: Sounding Reference Signal) transmitted from the mobile terminal apparatus.

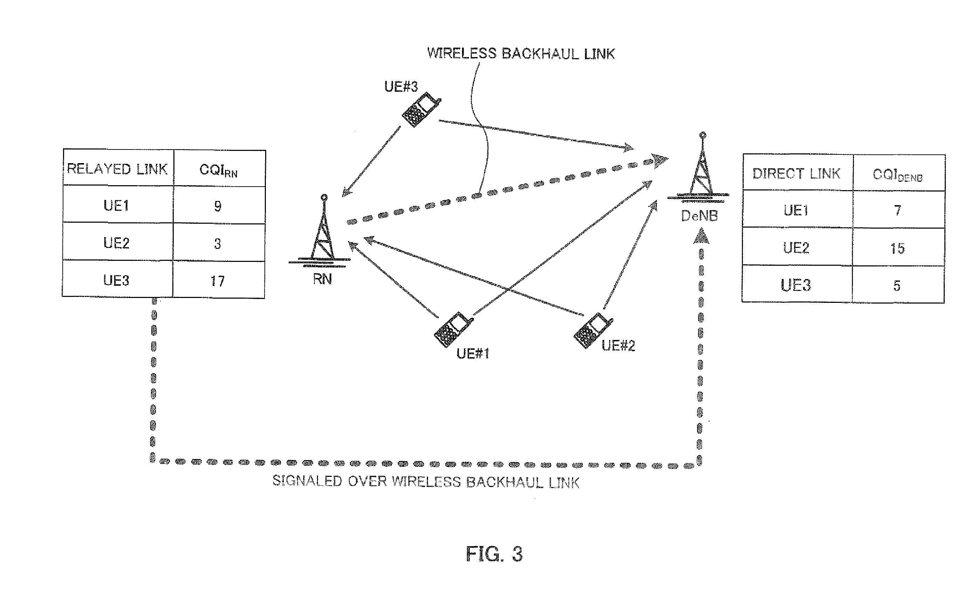

Next, the radio relay station apparatus notifies the radio base station apparatus of channel quality ($CQI_{RN}$) information of each mobile terminal apparatus via the backhaul link (see Fig. 3). The radio base station apparatus uses the received channel quality $CQI_{RN}$) information at the radio relay station side and the channel quality ($CQI_{DeNB}$) information at the radio base station side as a basis to select a mobile terminal apparatus to perform communication via the direct link and a mobile terminal apparatus to perform communication via the relay link. For example, the radio base station apparatus can select a mobile terminal apparatus of the highest value of channel quality ($CQI_{DeNB}$) at the radio base station side and a mobile terminal apparatus of the highest value of channel quality ($CQI_{RN}$) at the radio relay station side.

However, the above- mentioned channel quality information does not consider any influence of the interference between the mobile terminal apparatus to perform communication via the relay link and the mobile terminal apparatus to perform communication via the direct link. If these mobile terminal apparatuses are actually allocated to the same resource block, the influence of interference may be increased seriously.

Accordingly, when selecting a mobile terminal apparatus to perform communication via the direct link and a mobile terminal apparatus to perform communication via the relay link, the radio base station apparatus needs to consider the influence of interference between the mobile terminal apparatuses to select. More specifically, it obtains correction values of channel quality that consider the influence of interference from other mobile terminal apparatuses and selects a mobile terminal apparatus to allocate radio resources based on information of the correction values of channel quality.

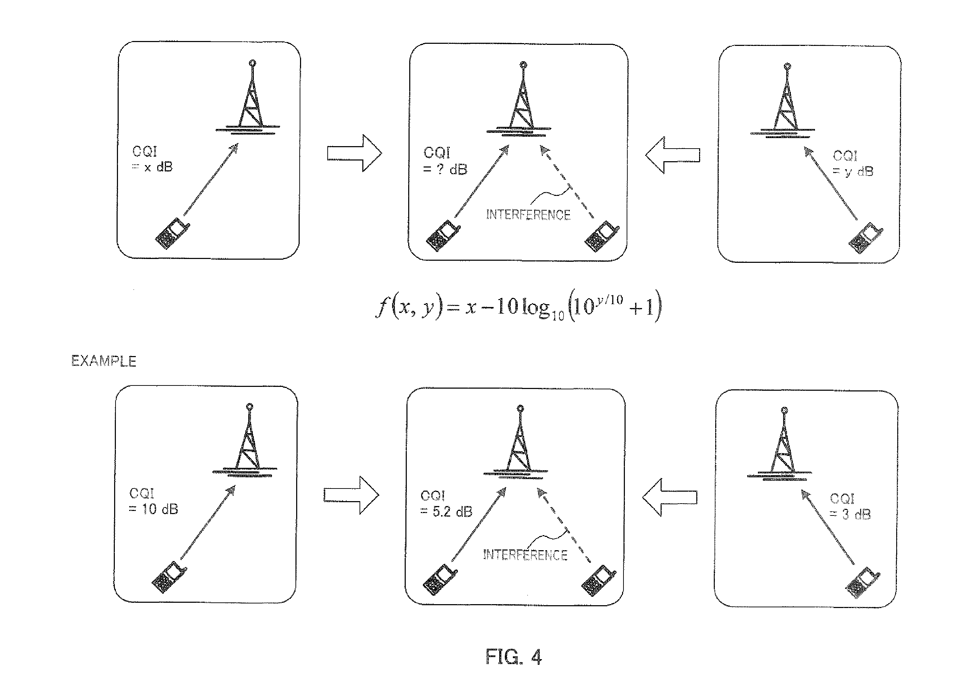

For example, as illustrated in Fig. 4, assuming that there exist UE#1 having channel quality ($CQI_{RN1}$) of 10 dB for the radio relay station apparatus and UE#2 having channel quality ($CQI_{RN2}$) of 3 dB for the radio relay station apparatus, a correction value of channel quality of UE#1 considering interference from UE#2 can be obtained by the following equation (1).

$$f(x,y)=x-10\ \log_{10}(10^{y/10}+1)\ \circ\circ\circ\ (1)$$

In the case of Fig. 4, when applying the channel quality information of each UE and the above-mentioned equation (1), the correction value of channel quality of UE#1 considering the influence of interference from UE#2 becomes 5.2 dB. The calculated correction value of channel quality can be applied to scheduling and AMC (Adaptive Modulation and Coding).

In this way, a correction value of channel quality for each mobile terminal apparatus, considering the influence of interference from other mobile terminal apparatuses is obtained by using the above-mentioned equation (1) and channel quality information of the mobile terminal apparatus, and the correction value of channel quality is used as a basis to determine combination of a mobile terminal apparatus to perform communication via the direct link and a mobile terminal apparatus to perform communication via the relay link, preferably.

A correction value of channel quality ($CQI_{DeNB}$) at the radio base station side is calculated by the radio base station apparatus based on the channel quality ($CQI_{DeNB}$) information at the radio base station side. And, a correction value of channel quality ($CQI_{RN}$) at the radio relay station side is also calculated by the radio base station apparatus based on channel quality ($CQI_{RN}$) information at the radio relay station side transmitted from the radio relay station apparatus.

Next description is made about a method for selecting a mobile terminal apparatus to allocate radio resources based on a correction value of channel quality when the radio base station apparatus (DeNB), the radio relay station apparatus (RN) and the mobile terminal apparatuses (UE#1 to UE#3) exist in the same cell.

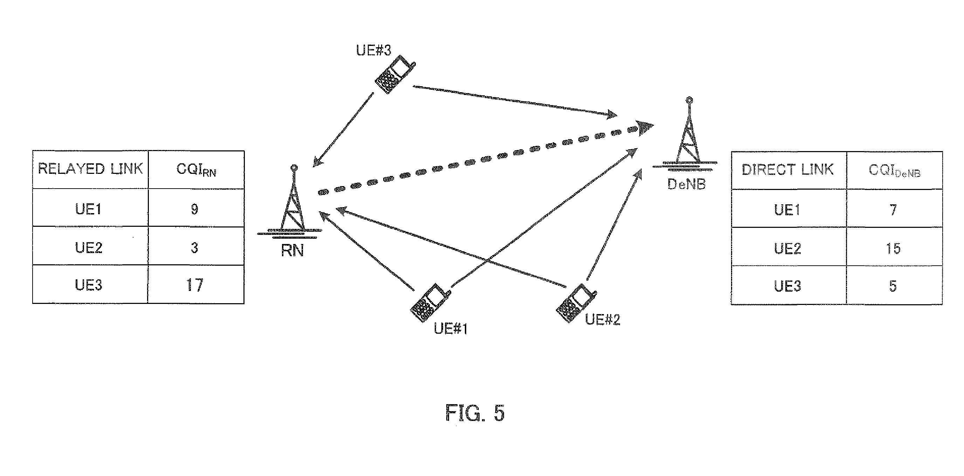

First, in the radio relay station apparatus and the base station apparatus, channel quality of each mobile terminal apparatus is measured (see Fig. 5). Here, as an example, it is assumed that for the radio relay station apparatus, $CQI_{RN}$ of UE#1 is 9, $CQI_{RN}$ of UE#2 is 3, $CQI_{RN}$ of UE#3 is 17. Besides, it is also assumed that for the radio base station apparatus, $CQI_{DeNB}$ of UE#1 is 7, $CQI_{DeNB}$ of UE#2 is 15, $CQI_{DeNB}$ of UE#3 is 5.

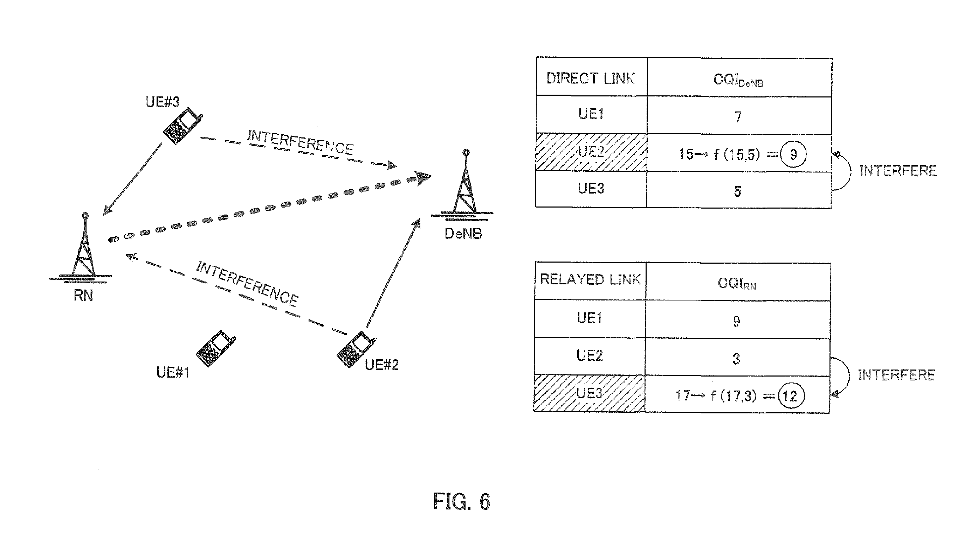

Next, the radio relay station apparatus notifies the radio base station apparatus of channel quality ($CQI_{RN}$) information of each mobile terminal apparatus via the backhaul link. The radio base station apparatus obtains a correction value of channel quality ($CQI_{RN}$) at the radio relay station side and a correction value of channel quality ($CQI_{DeNB}$) at the radio base station side, for each mobile terminal apparatus, by using the above-mentioned equation (1) and the obtained channel quality information. Fig. 6 shows the case where, for the channel quality ($CQI_{DeNB}$) information at the radio base station side, the correction value of channel quality of UE#2 is obtained in consideration of interference from UE#3. And, it also shows the case where, for the channel quality ($CQI_{RN}$) information at the radio relay station side, the correction value of channel quality of UE#3 is obtained in consideration of interference from UE#2.

The radio base station apparatus calculates correction values of channel quality of all combinations of mobile terminal apparatuses. Then, the radio base station apparatus uses the calculated correction values of channel quality as a basis to select an optimal combination of a mobile terminal apparatus to perform communication via a relay link and a mobile terminal apparatus to perform communication via a direct link.

As the mobile terminal apparatus to perform communication via a relay link and the mobile terminal apparatus to perform communication via a direct link are thus selected in considering the influence of interference between mobile terminal apparatuses in advance, it is possible to reduce interference between the mobile terminal apparatuses effectively. And, as the radio base station apparatus estimates the influence of interference between the mobile terminal apparatus judiciously and selects optimal mobile terminal apparatuses, it is possible to improve the user throughput and increase the capacity.

Note that the number of other mobile terminal apparatuses from which the influence of interference needs to be considered may be determined in accordance with the number of mobile terminal apparatuses to be allocated to the same resource block. For example, if one mobile terminal apparatus performs communication via a relay link and one mobile terminal apparatus performs communication via a direct link, a correction value of channel quality for each mobile terminal apparatus may be calculated considering the influence of interference another single mobile terminal apparatus. Further, there exist three or more mobile terminal apparatuses arranged in the same resource block, correction values of channel quality may be calculated considering the influence of interference from other mobile terminal apparatuses in accordance with the number of mobile terminal apparatuses arranged.

Next description is made about the case where the radio relay station apparatus and/or radio base station apparatus has a plurality of antennas.

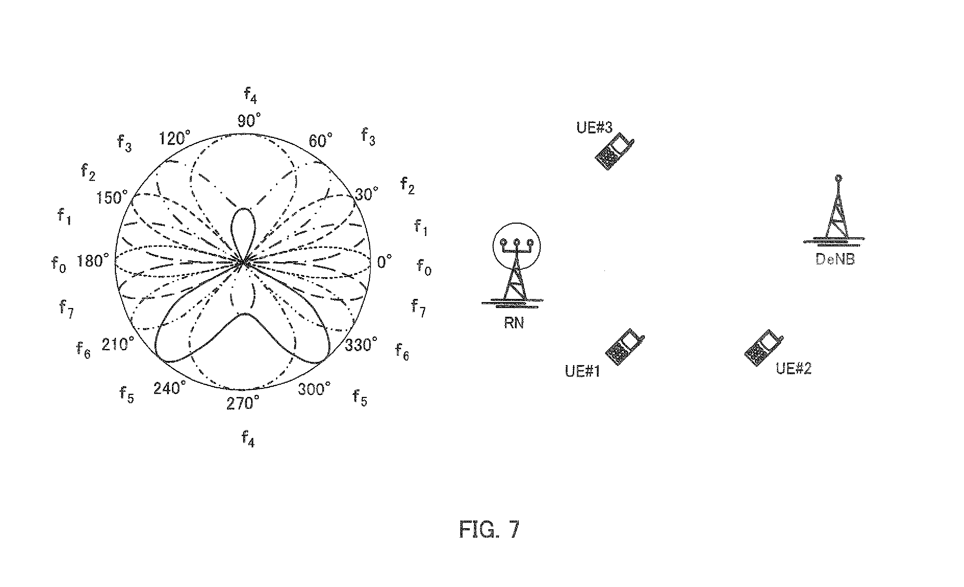

When the radio relay station apparatus has a plurality of antennas, a beamforming pattern is formed in a direction capable of efficient reception when the radio relay station apparatus performs communication with the mobile terminal apparatus (see Fig. 7). In this case, it is preferable that the beamforming pattern is considered in the above-mentioned calculation of correction values of channel quality.

Next description is made about a method of selecting a mobile terminal apparatus to perform communication via a relay link and a mobile terminal apparatus to perform communication via a direct link based on correction values of channel quality calculated in consideration of interference from other mobile terminal apparatuses when the radio relay station apparatus has a plurality of antennas. Note that in the following description, the beamforming pattern is defined to have specific directions (RBI: Receive Beam Index, $f_0$ to $f_7$), however, the direction of the beamforming pattern is by no means limited to these and may be adjusted as appropriate in accordance with the position of the mobile terminal apparatus or the like.

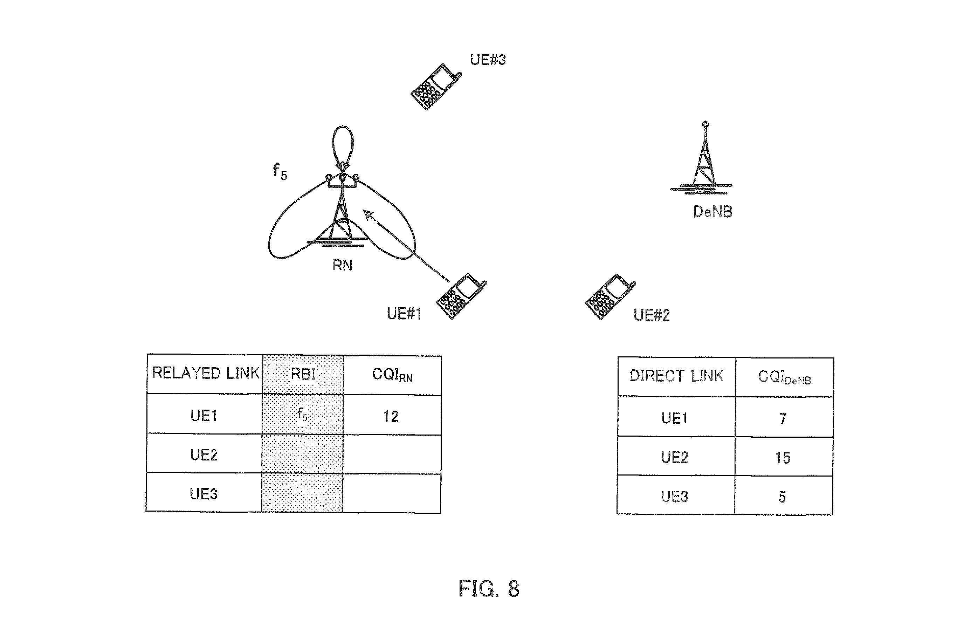

First, in the radio relay station apparatus and the radio base station apparatus, the above-mentioned measurement is made of channel quality of each mobile terminal apparatus. The radio relay station apparatus having a plurality of antennas forms a beamforming pattern in a direction capable of efficient reception for each mobile terminal apparatus and measures channel quality (see Figs. 8 to 10).

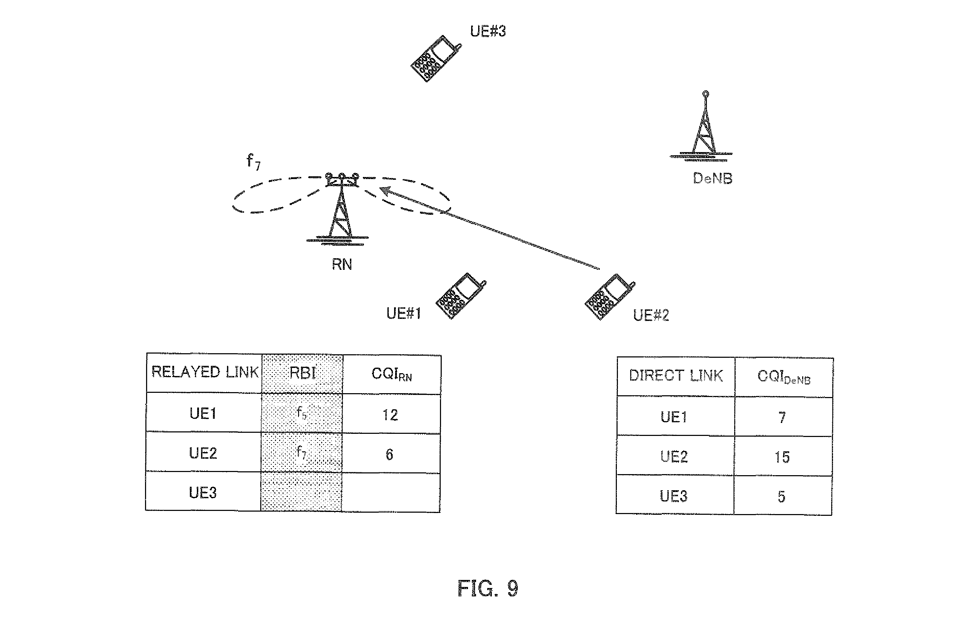

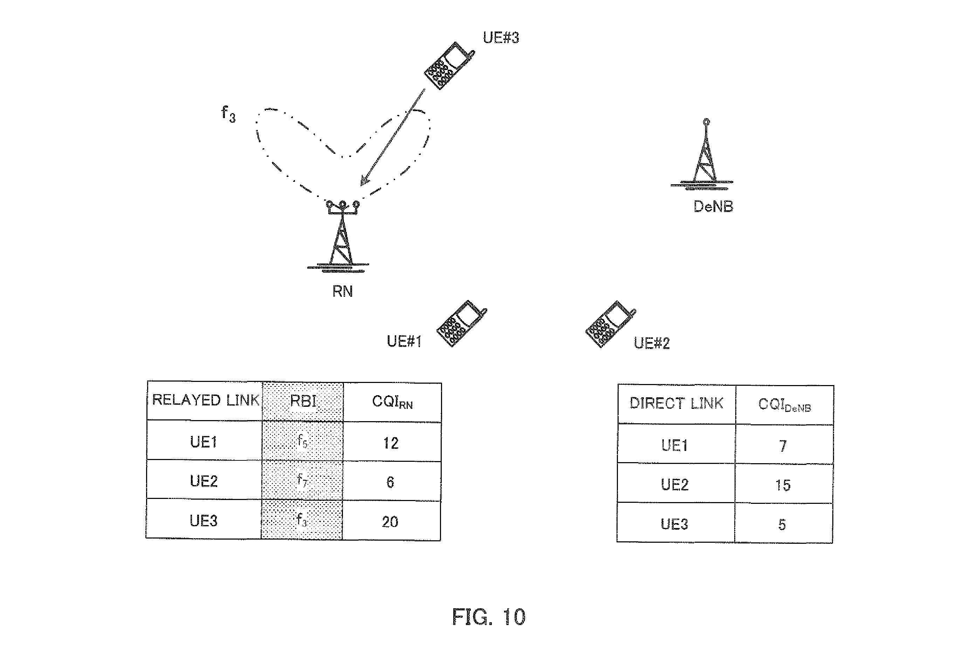

In Fig. 8, the radio relay station apparatus forms a beamforming pattern in a predetermined direction ($f_5$) for the mobile terminal apparatus (UE#1) and measures channel quality of UE#1. And, in Fig. 9, the radio relay station apparatus forms a beamforming pattern in a predetermined direction ($f_7$) for the mobile terminal apparatus (UE#2), and in Fig. 10, the radio relay station apparatus forms a beamforming pattern in a predetermined direction ($f_3$) for the mobile terminal apparatus (UE#3) and measures channel quality ($CQI_{RN}$)

Next, the radio relay station apparatus notifies the radio base station apparatus of information of channel quality ($CQI_{RN}$) information of each mobile terminal apparatus via the backhaul link. The radio base station apparatus calculates a correction value of the channel quality information with use of the above-mentioned equation (1) and the obtained channel quality information for each mobile terminal apparatus.

However, then, the radio base station apparatus is considered to calculate a correction value of channel quality ($CQI_{RN}$) at the radio relay station apparatus side based on the channel quality ($CQI_{RN}$) at the radio relay station apparatus side transmitted from the radio relay station apparatus. In this case, the correction value of channel quality ($CQI_{RN}$) of each mobile terminal apparatus may be calculated in consideration of more than actual influence of interference from other mobile terminal apparatuses.

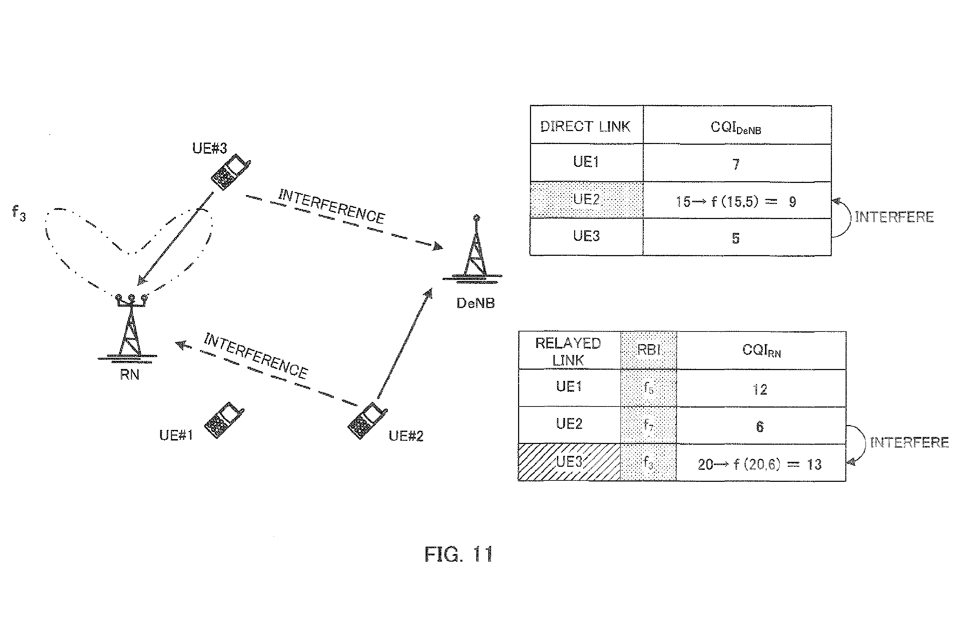

For example, Fig. 11 illustrates the case where in the radio base station apparatus, the channel quality information transmitted from the radio relay station apparatus is used as a basis to calculate a correction value of channel quality ($CQI_{RN}$) of UE#3 in consideration of influence from UE#2. The radio base station apparatus is considered to obtain the correction value of channel quality based on the channel quality ($CQI_{RN}$) information of UE#3 (here, 20), the channel quality ($CQI_{RN}$) information of UE#2 (here, 6) and the above-mentioned equation (1). However, in this case, the channel quality information of UE#2 is a value to which the radio relay station apparatus applies the beamforming pattern direction ($f_7$) that is different from the beamforming pattern direction ($f_3$) applied to communication with UE#3.

When the radio relay station apparatus performs communication with UE#3, the beamforming pattern direction is f3 and in the case illustrated in Fig. 11, a correction value of channel quality of UE#3 is calculated by overestimating the influence of interference from UE#2. Consequently, it becomes difficult for the radio base station apparatus to select a combination of mobile terminal apparatuses to allocate radio resources to in consideration of the influence of interference between the mobile terminal apparatuses appropriately.

Accordingly, when the radio relay station apparatus equipped with a plurality of antennas forms a beamforming pattern, it is desirable that a correction value of channel quality of each mobile terminal apparatus is calculated in consideration of a direction of the beamforming pattern.

For example, when a correction value of channel quality of UE#3 is calculated in consideration of interference of UE#2, obtained is channel quality ($CQI_{RN}$) of UE#2 to which the beamforming pattern direction (here, $f_3$) applied to measurement of channel quality ($CQI_{RN}$) of UE#3 is applied. Then, the correction value of channel quality of UE#3 is calculated using the above-mentioned equation (1).

In this way, as the correction value of channel quality is calculated in consideration of the beamforming pattern direction, it is possible to calculate the correction value of channel quality of each mobile terminal apparatus appropriately in accordance with the actual communication environment. Consequently, the radio base station apparatus can select a mobile terminal apparatus to perform communication via a relay link and a mobile terminal apparatus to perform communication via a direct link based on appropriate estimation of interference between the mobile terminal apparatuses, thereby improving the user throughput and increasing the capacity.

Note that when the radio base station apparatus has a plurality of antennas, as described above, a correction value of channel quality ($CQI_{DeNB}$) of each mobile terminal apparatus for the radio base station apparatus may be calculated in consideration of the beamforming pattern applied to the mobile terminal apparatus.

In the meantime, in the radio base station apparatus, when the correction value of channel quality is calculated in consideration of the beamforming pattern direction, the channel quality ($CQI_{RN}$) information of other mobile terminal apparatuses for the beamforming pattern applied to each mobile terminal apparatus needs to be transmitted to the radio base station apparatus via the backhaul link. However, in this case, there may cause increase in overhead.

Therefore, in the present embodiment, the radio relay station apparatus first calculates a correction value of channel quality of each mobile terminal apparatus, then selects a predetermined mobile terminal apparatus out of other mobile terminal apparatuses causing interference, and transmits, to the radio base station apparatus, information in consideration of interference given from the predetermined mobile terminal apparatus.

Specifically, the radio relay station apparatus measures channel quality ($CQI_{RN}$) of a mobile terminal apparatus and calculates a channel quality reduction value ($\Delta CQI_{RN}$) to reduce due to interference the mobile terminal apparatus is given from the other mobile terminal apparatus and selects a predetermined mobile terminal apparatus from other mobile terminal apparatus that gives interference to the mobile terminal apparatus. Then, the channel quality ($CQI_{RN}$) of each mobile terminal apparatus, information of the predetermined mobile terminal apparatus selected for each mobile terminal apparatus and channel quality reduction value ($\Delta CQI_{RN}$) are transmitted to the radio base station apparatus.

That is, the radio relay station apparatus selects, for each mobile terminal apparatus, a predetermined mobile terminal apparatus from other mobile terminal apparatus from which the mobile terminal apparatus suffers interference, based on correction values of channel quality and channel quality reduction value ($\Delta CQI_{RN}$). Then, it transmits, to the radio base station, information about channel quality in consideration of influence of interference from the predetermined mobile terminal apparatus. Here, the channel quality reduction value ($\Delta CQI_{RN}$) corresponds to a difference between channel quality ($CQI_{RN}$) of each mobile terminal apparatus and a correction value of channel quality ($CQI_{RN}$). As the channel quality reduction value ($\Delta CQI_{RN}$) is transmitted, it is possible to reduce the number of bits as compared with the case where the correction value of channel quality ($CQI_{RN}$) is transmitted.

As the predetermined mobile terminal apparatus to be selected from other mobile terminal apparatuses, for example, a mobile terminal apparatus of smallest interference is selected which shows smallest interference for the mobile terminal apparatus. In this case, the radio relay station apparatus calculates a correction value of channel quality information based on the measured channel quality information, then calculates a channel quality reduction value ($\Delta CQI_{RN}$) and selects a mobile terminal apparatus of smallest interference that becomes smallest interference for the mobile terminal apparatus.

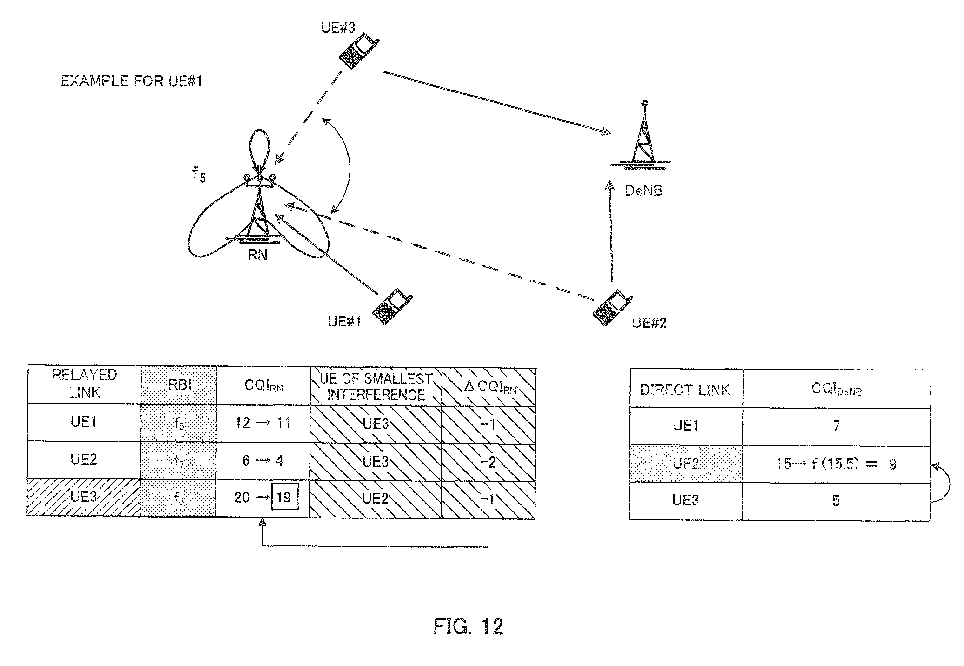

Fig. 12 illustrates the case where the mobile terminal apparatus of smallest interference for UE#1 is UE#3 ($\Delta CQI_{RN} = -1$), the mobile terminal apparatus of smallest interference for UE#2 is UE#3 ($\Delta CQI_{RN} = -2$), and the mobile terminal apparatus of smallest interference for UE#3 is UE#2 ($\Delta CQI_{RN} = -1$). As described above, a difference between channel quality ($CQI_{RN}$) of each mobile terminal apparatus and a correction value of the channel quality ($CQI_{RN}$) corresponds to a channel quality reduction value ($\Delta CQI_{RN}$).

And, when the radio relay station apparatus has a plurality of antennas, as described above, a correction value of channel quality to be calculated in consideration of interference of predetermined terminal apparatuses for the mobile terminal apparatus is given in consideration of a direction of beamforming pattern applied to measurement of channel quality of the mobile terminal apparatus.

The radio relay station apparatus transmits, to the radio base station apparatus, a channel quality reduction value ($\Delta CQI_{RN}$) to reduce by interference from the mobile terminal apparatus of smallest interference and information about the mobile terminal apparatus of smallest interference, channel quality $CQI_{RN}$ of the mobile terminal apparatus, via the backhaul link.

The radio base station apparatus selects a mobile terminal apparatus to perform communication via the direct link and a mobile terminal apparatus to perform communication via the relay link based on the correction values of channel quality information of respective mobile terminal apparatuses in the radio base station apparatus and information received from the radio relay station apparatus.

For example, in the radio base station apparatus, when UE#3 is selected as a mobile terminal apparatus to be assigned to the relay link, the selected mobile terminal apparatus to perform communication via the direct link is preferably a mobile terminal apparatus (here, UE#2) which is a mobile terminal apparatus of smallest interference for UE#3. With this selection, it is possible to reduce overhead in transmission from the radio relay station apparatus to the radio base station apparatus via the backhaul link and to make appropriate choice of mobile terminal apparatuses with which the radio base station apparatus performs communication via the relay link and the direct link.

Further, in the radio relay station apparatus, a predetermined mobile terminal apparatus to be selected from a plurality of mobile terminal apparatuses is not limited to a mobile terminal apparatus of smallest interference which influence is smallest for the mobile terminal apparatus. It may be a mobile terminal apparatus of largest interference which influence is largest for the mobile terminal apparatus. In this case, the radio relay station apparatus calculates a correction value of channel quality information based on measured channel quality information, calculates a channel quality reduction value ($\Delta CQI_{RN}$) and selects a mobile terminal apparatus of largest interference which influence is largest for the mobile terminal apparatus.

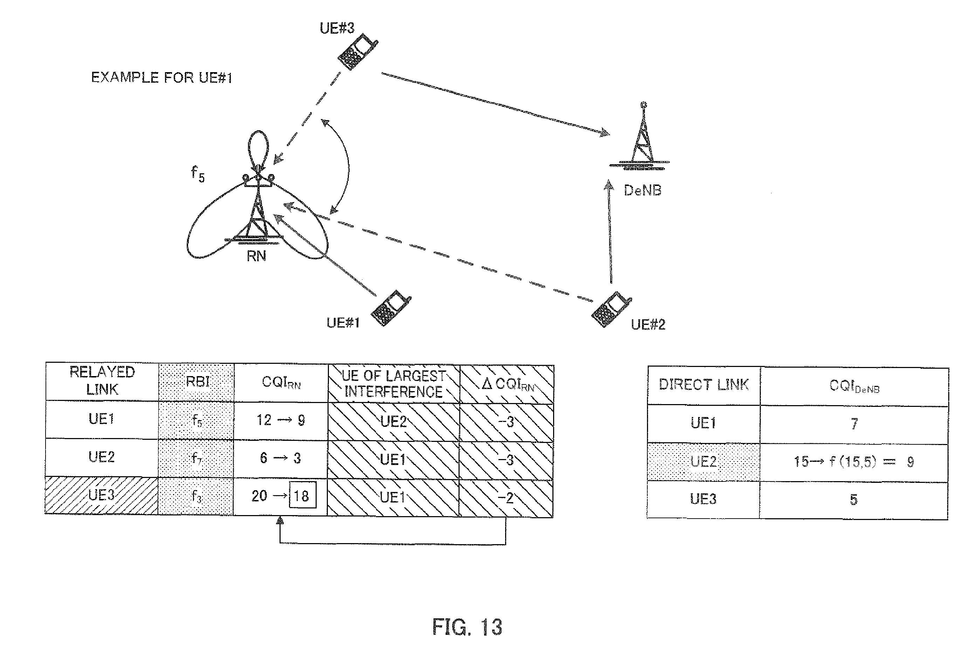

Fig. 13 illustrates the case where the mobile terminal apparatus of largest interference for UE#1 is UE#2 ($\Delta CQI_{RN}$ = -3), the mobile terminal apparatus of largest interference for UE#2 is UE#1 ($\Delta CQI_{RN}$ =-3), and the mobile terminal apparatus of largest interference for UE#3 is UE#1 ($\Delta CQI_{RN}$ = -2). And, when the radio relay station apparatus has a plurality of antennas, as described above, a correction value of channel quality for each mobile terminal apparatus to be calculated in consideration of interference from predetermined mobile terminal apparatuses is given in consideration of a direction of beamforming pattern applied to measurement of channel quality of the mobile terminal apparatus.

The radio relay station apparatus transmits, to the radio base station apparatus, a channel quality reduction value ($\Delta CQI_{RN}$) to be reduced by interference from the mobile terminal apparatus of largest interference and information about the mobile terminal apparatus of largest interference and channel quality $CQI_{RN}$ of the mobile terminal apparatus, via the backhaul link.

The radio base station apparatus selects a mobile terminal apparatus to perform communication via the direct link and a mobile terminal apparatus to perform communication via a relay link based on correction values of channel quality information of respective mobile terminal apparatuses in the radio base station apparatus and information received from the radio relay station apparatus.

For example, in the radio base station apparatus, when UE#3 is selected as a mobile terminal apparatus to allocate the relay link to, the selected mobile terminal apparatus to perform communication via the direct link is preferably a mobile terminal apparatus (here, #2) other than a mobile terminal apparatus of largest interference for UE#3 (here, UE#1). With this selection, it is possible to reduce overhead in transmission from the radio relay station apparatus to the radio base station apparatus via the backhaul link and to select combination of a mobile terminal apparatus to perform communication via the direct link and a mobile terminal apparatus to perform communication via the relay link based on appropriate estimation of interference between mobile terminal apparatuses by the radio base station apparatus.

Besides, a mobile terminal apparatus of largest interference for each mobile terminal apparatus is selected and selection of a mobile terminal apparatus is made based on a channel quality reduction value, thereby being able to assure minimum channel quality in selection of the mobile terminal apparatus by the radio base station apparatus.

Here, in the radio relay station apparatus, when a mobile terminal apparatus of largest interference is selected as a predetermined mobile terminal apparatus, it may be configured that mobile terminal apparatus information of the mobile terminal apparatus of largest interference is not transmitted. This is for assuring minimum channel quality, whichever mobile terminal apparatus is selected by the radio base station apparatus, by receiving at least a channel quality reduction value ($\Delta CQI_{RN}$) from the radio relay station apparatus.

Further, in the above description, it is assumed that one information piece of each mobile terminal apparatus (a channel quality reduction value in a mobile terminal apparatus of smallest interference or a channel quality reduction value in a mobile terminal apparatus of largest interference) is transmitted to the radio base station apparatus, however, the information piece is not limited to one. For example, it may be configured that a mobile terminal apparatus of largest interference and a mobile terminal apparatus of smallest interference are selected for each mobile terminal apparatus and channel quality reduction values of the respective mobile terminal apparatuses may be transmitted. Further, a mobile terminal apparatus other than the mobile terminal apparatus of largest interference and the mobile terminal apparatus of smallest interference may be selected.

Here, the number of other mobile terminal apparatuses from which interference needs to be considered may be determined in accordance with the number of mobile terminal apparatuses to be assigned to the same resource block. For example, when one mobile terminal apparatus performs communication via each of the relay link and the direct link, a correction value of channel quality may be obtained in consideration of interference from another mobile terminal apparatus for the mobile terminal apparatus. And, when the number of mobile terminal apparatuses arranged in the same resource block is 3 or more, a correction value of channel quality is obtained in consideration of any influence of interference from other mobile terminal apparatuses in accordance with the number of mobile terminal apparatuses arranged.

Next description is made, with reference to the accompanying drawings, about configurations of the above-described radio relay station apparatus and radio base station apparatus.

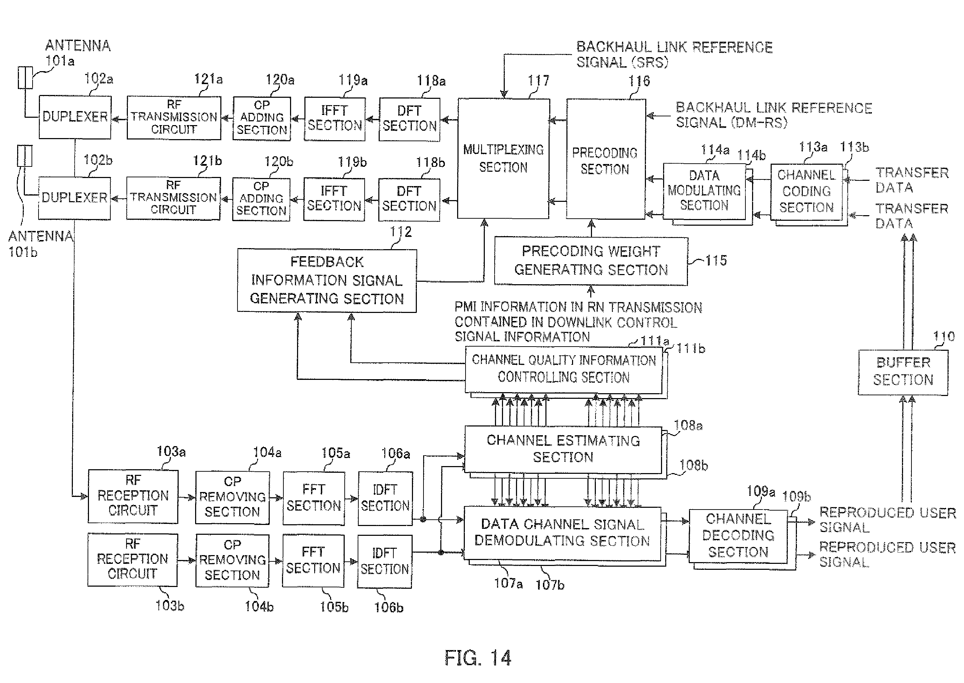

Fig. 14 is a block diagram illustrating a configuration of a radio relay station apparatus (DF type relay node) RN according to the present embodiment. Here, illustration in Fig. 14 is simplified for explanation and an uplink receiving section and a transmitting (transferring) section are only illustrated. However, needless to say, the radio relay station apparatus is configured to have standard parts. And, the number of antennas provided in the radio relay station apparatus is not limited to that illustrated in the drawings.

In the radio relay station apparatus illustrated in Fig. 14, transmission signals transmitted from the mobile terminal apparatuses are received by antennas 101a and 101b, electrically separated into transmission paths and reception paths by duplexers 102a and 102b, and output to RF reception circuits 103a and 103b. Then, in the RF reception circuits 103a and 103b, the signals are subjected to frequency conversion processing and converted from radio frequency signals to baseband signals, and then, output to CP removing sections 104a and 104b. Here, the antennas 101a, 101b, the duplexers 102a, 102b, and the RF reception circuits 103a, 103b make up a receiving section for receiving SRSs from the mobile terminal apparatuses.

The CP removing sections 104a and 104b remove CPs (Cyclic Prefix) from the frequency-converted signals, and the CP-removed signals are output to FFT (fast Fourier transform) sections 105a and 105b. The FFT sections 105a and 105b perform Fourier transform on the CP-removed signals, which are converted from time-series signals into frequency-domain signals. The converted signals are output to IDFT (inverse discrete Fourier transform) sections 106a and 106b. The IDFT sections 106a and 106b preform inverse discrete Fourier transform on the converted frequency-domain signals, which signals are converted from the frequency-domain signals to time-series signals. The converted signals are output to channel estimating sections 108a and 108b and data channel signal demodulating sections 107a and 107b.

The channel estimating sections 108a and 108b estimate channels states based on DM-RSs (Demodulation Reference Signals) and SRSs included in reception signals output from the IDFT sections 106 and 106b, and the channel states estimated based on the DM-RSs are transmitted to the data channel signal demodulating sections 107a and 107b. The data channel signal demodulating sections 107a and 107b demodulate data channel signals based on the transmitted channel states. The demodulated data channel signals are channel-decoded in channel decoding sections 109a and 109b and reproduced into user signals. The reproduced user signals are output to a buffer section 110 and stored there until a request for transfer is received from the radio base station apparatus DeNB.

Channel quality information controlling sections 111a and 111b measure channel quality (CQIs) of mobile terminal apparatuses based on the reference signals (SRSs) transmitted from the mobile terminal apparatuses. And, the obtained channel quality information is used as a basis to calculate a correction value of channel quality for each mobile terminal apparatus in consideration of the influence of interference from other mobile terminal apparatuses as described above, and then, a channel quality reduction value ($\Delta CQI_{RN}$) is calculated. And, the obtained information is used as a basis to select a predetermined mobile terminal apparatus from the other mobile terminal apparatuses that interfere with the mobile terminal apparatus. The selected predetermined mobile terminal apparatus may be, for example, a mobile terminal apparatus of smallest interference which influence is smallest for the mobile terminal apparatus or a mobile terminal apparatus of largest interference which influence is largest for the mobile terminal apparatus. The information output from the channel quality information controlling sections 111a and 111b is output to a feedback information signal generating sections 112.

The feedback information signal generating section 112 generates feedback information signals to transmit information transmitted from the channel quality information controlling sections 111a and 111b (channel quality information of each mobile terminal apparatus, information of the predetermined mobile terminal apparatus and a channel quality reduction value to reduce due to interference from the predetermined mobile terminal apparatus) as feedback to the radio base station apparatus. The feedback information signal generating section 112 outputs the generated feedback information signals to a multiplexing section 117.

A precoding weight generating section 115 generates precoding weights using RMI information in relay node transmission included in downlink control information communicated from the radio base station apparatus DeNB. The precoding weight generating section 115 outputs the generated precoding weights to a precoding section 116.

The precoding section 116 performs phase shift and/or amplitude shift on transmission data, for each of the antennas 101a and 101b, based on the precoding weights associated with the PMI information. The transmission data phase-shifted and/or amplitude-shifted by the precoding section 116 is output to a multiplexing section 117. The precoding section 116 multiplexes the transmission data before precoding with a backhaul link reference signal. This backhaul link reference signal is a reference signal used for demodulation at the radio base station apparatus DeNB and is the same as DM-RS.

Here, the transmission data is user signals (transfer data) accumulated in the buffer section 110. The transfer data is channel- coded by channel coding sections 113a and 113b and output to data modulating sections 114a and 114b. The data modulating sections 114a and 114b data- modulate the channel- coded transfer data. The data modulating sections 114a and 114b output the data- modulated transfer data to the precoding section 116.

The multiplexing section 117 combines the phase-shifted and/or amplitude-shifted transfer data, the feedback information signals generated by the feedback information signal generating section 112 and sounding reference signals (SRSs) to measure channel quality (CQIs) for the backhaul link to generate transmission signals for the respective antennas 101a and 101b.

The transmission signals combined in the multiplexing section 117 are subjected to discrete Fourier transform at DFT (discrete Fourier transform) sections 118a and 118b and converted from time-series signals into frequency-domain signals. The converted signals are output to IFFT (inverse fast Fourier transform) sections 119a and 119b. The IFFT sections 119a and 119b perform inverse fast Fourier transform on the signals having been subjected to DFT, and the signals are converted from frequency domain signals to time-series signals. The converted signals are output to CP adding sections 120a and 120b. The CP adding sections 120a and 120b add CPs to the converted signals. The CP-added signals are output to RF transmission circuits 121a and 121b.

The CP-added signals are subjected to frequency conversion into radio-frequency signals at the RF transmission circuits 121a and 121b. Then, the frequency-converted signals are output to the antennas 101a and 101b via the duplexers 102a and 102b, and then transmitted in the uplink from the antennas 101a and 101b to the radio base station apparatus DeNB. Note that these RF transmission circuits 121a and 121b, duplexers 102a and 102b, and antennas 101a and 101b make up a transmitting section to transmit feedback information signals including measurement results of channel quality of the relay link to the radio base station apparatus DeNB.

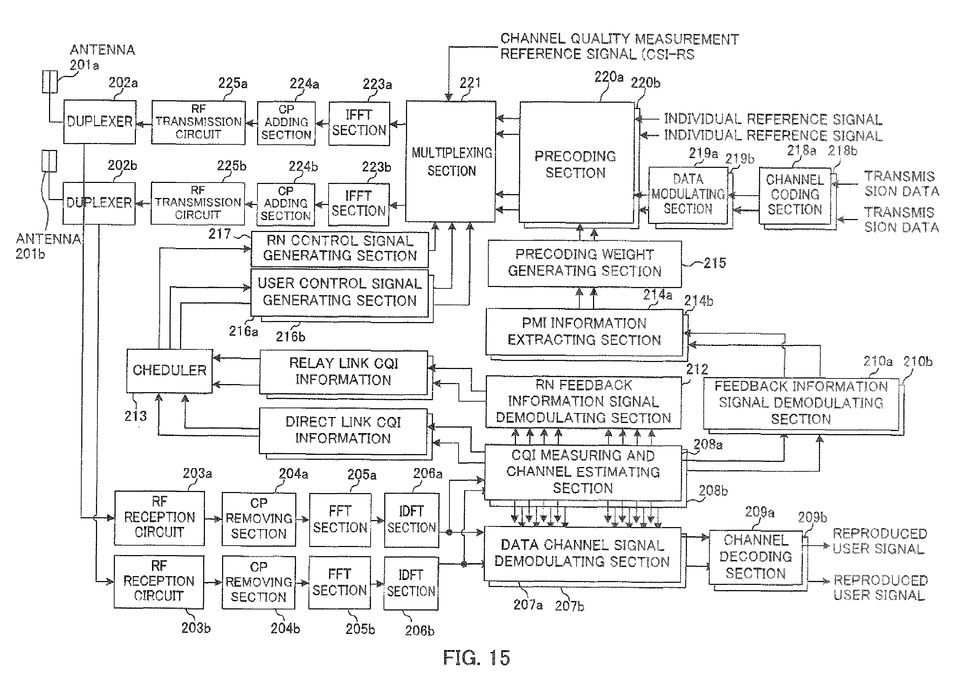

Fig. 15 is a block diagram illustrating a configuration of the radio base station apparatus DeNB according to the present embodiment. Note that illustration in Fig. 15 is simplified for explanation and, needless to say, the radio base station apparatus is configured to have standard parts. And, the number of antennas provided in the radio base station apparatus is not limited to that illustrated in the drawings.

In the radio base station apparatus DeNB illustrated in Fig. 15, transmission signals transmitted from the mobile terminal apparatuses UE#1 to UE#3 and transmission signals transmitted from the relay node RN via the backhaul link are received by antennas 201a and 201b, electrically separated into transmission paths and reception paths at duplexers 202a and 202b, and then, output to RF reception circuits 203a and 203b. Then, the RF reception circuits 203a and 203b perform frequency conversion and convert radio frequency signals to baseband signals, which are then output to CP removing sections 204a and 204b. Note that the antennas 201a and 201b, the duplexers 202a and 202b, the RF reception circuits 203a and 203b make up a receiving section to receive SRSs from the mobile terminal apparatuses and also receive feedback information including measurement results of channel quality of the relay links from the relay node RN.

The CP removing sections 204a and 204b remove CPs from the frequency-converted signals, and the CP-removed signals are output to FFT sections 205a and 205b. The FFT sections 205a and 205b perform Fourier transform on the CP-removed signals, and converts time-series signals into frequency domain signals. The converted signals are output to IDFT sections 206a and 206b. The IDFT sections 206a and 206b perform inverse discrete Fourier transform on the frequency domain signals and convert the frequency domain signals into time-series signals. The converted signals are output to CQI measuring and channel estimating sections 208a and 208b, data channel signal demodulating sections 207a and 207b.

The CQI measuring and channel estimating sections 208a and 208b estimate channel states from reference signals for channel quality measurement (SRSs) and demodulation reference signals (DM-RSs) included in reception signals output from the IDFT sections 206a and 206b and transmit the channel states estimated only with use of the DM-RSs to data channel signal demodulating sections 207a and 207b. The data channel signal demodulating sections 207a and 207b demodulate data channel signals based on the received channel states. The demodulated data channel signals are channel-decoded in channel decoding sections 209a and 209b and reproduced into user signals.

The CQI measuring and channel estimating sections 208a and 208b measure channel quality (CQIs) with use of the channel states estimated with use of SRSs from the mobile terminal apparatuses. In other words, the CQI measuring and channel estimating sections 208a and 208b measure CQI ($CQI_{DeNB1}$ to $CQI_{DeNB3}$) with use of the SRSs from the respective mobile terminal apparatuses in the cell. These CQI measurement results are used in allocation of radio resources as direct link CQI information. Note that the CQI measuring and channel estimating sections 208a and 208b measure CQIs of the backhaul link in the same manner.

The CQI measuring and channel estimating sections 208a and 208b communicate the estimated channel states also to feedback information signal demodulating sections 210a and 210b and an RN feedback information signal demodulating section 212. In the feedback information signal demodulating sections 210a and 210b, the communicated channel states are used as a basis to demodulate feedback information signals from the mobile terminal apparatuses (PMI information of the direct links of the mobile terminal apparatuses, rank information, and so on). The feedback information signal demodulating sections 210a and 210b output demodulated feedback information signals to PMI information extracting sections 214a and 214b.

The RN feedback information signal demodulating section 212 uses the received channel states as a basis to demodulate feedback information signals (CQIs and PMIs measured at the radio relay station apparatus RN and relay type information) transmitted from the relay node RN via the backhaul link. The demodulated RN feedback information signals are used in allocation of radio resources as relay link CQI information. Note that the feedback information signals include, in addition to the channel quality information of the respective mobile terminal apparatus, the above-mentioned information of the predetermined mobile terminal apparatus and information about the channel quality reduction values to reduce due to interference from the predetermined mobile terminal apparatus.

The PMI information extracting sections 214a and 214b extract PMI information from the demodulated feedback information signals and output the extracted PMI information to a precoding weight generating section 215. The precoding weight generating section 215 generates precoding weights using the PMI information extracted from the feedback information signals. The precoding weight generating section 215 outputs the generated precoding weights to precoding sections 220a and 220b.

The precoding sections 220a and 220b use the precoding weights corresponding to the PMI information as a basis to perform phase-shift and/or amplitude-shift on transmission data for the antennas 201a and 201b, separately. The transmission data phase-shifted and/or amplitude-shifted by the precoding sections 220a and 220b is output to a multiplexing section 221. In the precoding sections 220a and 220b, transmission data is multiplexed with individual reference signals prior to precoding. These individual reference signals are DM-RSs used in demodulation by the mobile terminal apparatuses UE.

Note that the transmission data is signals addressed to user terminals. The transmission data is channel-coded by channel coding sections 218a and 218b and output to data modulating sections 219a and 219b. The data modulating sections 219a and 219b data-modulate channel-coded transfer data. The data modulating sections 219a and 219b output data-modulated transfer data to the precoding sections 220a and 220b.

A scheduler 213 selects a mobile terminal apparatus to perform communication via a relay link and a mobile terminal apparatus to perform communication via a direct link based on the above-mentioned demodulated RN feedback information signals and direct-link CQI information and allocates radio resources to the mobile terminal apparatuses. For example, the scheduler selects, as the mobile terminal apparatus to perform communication via a relay link, a mobile terminal apparatus of highest channel quality out of channel quality information ($CQI_{RN}$) at the radio relay station side and allocates radio resources to the mobile terminal apparatus. And, it uses, as a basis, the information about a predetermined mobile terminal apparatus for the mobile terminal apparatus selected as the mobile terminal apparatus to perform communication via the relay link to select a mobile terminal apparatus to perform communication via a direct link and allocates radio resources to the mobile terminal apparatus. As an example, in Fig. 12, a mobile terminal apparatus UE#3 (relay link) of highest channel quality is selected based on the channel quality information ($CQI_{RN}$) of the mobile terminal apparatuses at the radio relay station side, and a mobile terminal apparatus UE#2 (direct link) of smallest interference for the mobile terminal apparatus is selected, and radio resources are allocated to these mobile terminal apparatuses.

User control signal generating sections 216a and 216b generate PDCCH (Physical Downlink Control Channel) signals for the respective mobile terminal apparatuses. Note that the PDCCH signals include, for example, resource allocation information, MCS information, information related to retransmission (RV: Redundancy Version), NDI (New Data Indicator), information of transmission power control, precoding information (PMI information), rank information (RI) and so on. The user control signal generating sections 216a and 126b output the generated PDCCH signals to a multiplexing section 221.

An RN control signal generating section 217 generates PDCCH signals for the relay node. Note that the PDCCH signals include, for example, resource allocation information, MCS information, information related to retransmission (RV: Redundancy Version), NDI (New Data Indicator), information of transmission power control, precoding information (PMI information), rank information (RI) and so on. The RN control signal generating section 217 outputs the generated PDCCH signals to the multiplexing section 221.

In the scheduler 213, when a mobile terminal apparatus to allocate radio resources to is determined, a MCS is determined in accordance with the mobile terminal apparatus. This determined MCS is transmitted in the PDCCH to the radio relay station apparatus RN or mobile terminal apparatus UE. For example, if the mobile terminal apparatus to allocate the radio resources is a direct-link mobile terminal apparatus, information of MCS suitable for the mobile terminal apparatus is transmitted to the mobile terminal apparatus UE as a PDCCH signal for the user. On the other hand, if the mobile terminal apparatus to allocate the radio resources is a relay-link mobile terminal apparatus, information of a MCS suitable for the mobile terminal apparatus is transmitted to the radio relay station apparatus RN as a PDCCH signal for RN.

The multiplexing section 221 combines the phase-shifted and/or amplitude-shifted transmission data, RN control signals generated by the RN control signal generating section 217, user control signals generated by the user control signal generating sections 216a and 216b, and channel quality measurement reference signals (CSI-RSs) to measure downlink channel quality in UE to generate transmission signals for the respective antennas 201a and 201b.

The transmission signals combined by the multiplexing section 221 are output to IFFT sections 223a and 223b. In the IFFT sections 223a and 223b, the transmission signals are subjected to inverse fast Fourier transform and converted from frequency domain signals to time-series signals. The converted signals are output to CP adding sections 224a and 224b. The CP adding sections 224a and 224b add CPs to the converted signals. The CP-added signals are output to RF transmission circuits 225a and 225b.

In the RF transmission circuits 225a and 225b, the CP added signals are subjected to frequency conversion and converted into radio frequency signals. The frequency-converted signals are output via the duplexers 202a and 202b to the antennas 201a and 201b, and transmitted from the antennas 201a and 201b to the radio relay station apparatus RN or the mobile terminal apparatus UE in the downlink. Note that these RF transmission circuits 225a and 225b, duplexers 202a and 202b, antennas 201a and 201b make up a transmitting section to transmit signals to the radio relay station apparatus RN or the mobile terminal apparatus UE.

The embodiments of the present invention have been described up to this point. However, a person of ordinary skill in the art would understand that the present invention is not limited to the embodiments described here. For example, in the above-described embodiments, the number of users and the number of processing units in an apparatus are by no means limiting and may be modified as appropriate in accordance with the configuration of the apparatus. Further, the present invention may be embodied in various modified or altered forms without departing from the scope and spirit of the present invention defined by claims. Accordingly, this description has been given for illustrative purposes only and is by no means intended to limit the present invention.

The disclosure of Japanese Patent Application No. 2010-276183, filed on December 10, 2010, including the specification, drawings, and abstract, is incorporated herein by reference in its entirety.

## Claims

1. A radio relay station apparatus comprising:

   a channel quality information controlling section configured to measure channel quality of a mobile terminal apparatus, calculate a channel quality reduction value to reduce for the mobile terminal apparatus due to interference from other mobile terminal apparatuses, and select a predetermined mobile terminal apparatus from the other mobile terminal apparatuses; and
   a transmitting section configured to transmit information of the channel quality of the mobile terminal apparatus, information of the predetermined mobile terminal apparatus selected and the channel quality reduction value to a radio base station apparatus.

2. The radio relay station apparatus of claim 1, wherein the channel quality information controlling section selects, as the predetermined mobile terminal apparatus, a mobile terminal apparatus of smallest interference which influence is smallest for the mobile terminal apparatus.

3. The radio relay station apparatus of claim 1, wherein the channel quality information controlling section selects, as the predetermined mobile terminal apparatus, a mobile terminal apparatus of largest interference which influence is largest for the mobile terminal apparatus.

4. The radio relay station apparatus of claim 1, wherein the channel quality information controlling section selects, as the predetermined mobile terminal apparatus, a mobile terminal apparatus of smallest interference which influence is smallest for the mobile terminal apparatus and a mobile terminal apparatus of largest interference which influence is largest for the mobile terminal apparatus.

5. The radio relay station apparatus of claim 1, wherein, when measuring the channel quality of the mobile terminal apparatus in a certain beamforming pattern, the channel quality information controlling section calculates the channel quality reduction value based on interference from the predetermined mobile terminal apparatus to which the beamforming pattern is applied.

6. The radio relay station apparatus of claim 1, wherein, when calculating the channel quality reduction value, the channel quality information controlling section selects one mobile terminal apparatus as the predetermined mobile terminal apparatus that interferes with the mobile terminal apparatus.

7. The radio relay station apparatus of claim 1, wherein, when calculating the channel quality reduction value, the channel quality information controlling section selects a plurality of mobile terminal apparatuses as the predetermined mobile terminal apparatus that interferes with the mobile terminal apparatus.

8. A radio base station apparatus comprising:

a channel quality information generating section configured to measure channel quality of each of a plurality of mobile terminal apparatuses and generate radio base station side channel quality information for the mobile terminal apparatus in consideration of interference from other mobile terminal apparatuses;
a feedback information signal demodulating section configured to demodulate a feedback information signal received from a radio relay station apparatus;
a scheduler configured to select a mobile terminal apparatus to perform communication via a direct link and a mobile terminal apparatus to perform communication via a relay link based on the feedback information signal and the radio base station side channel quality information and to generate scheduling information; and
a transmitting section configured to transmit the scheduling information to the radio relay station apparatus,
wherein the feedback information signal is information including channel quality of a plurality of mobile terminal apparatuses in the radio relay station apparatus, a channel quality reduction value to reduce for each of the mobile terminal apparatuses due to interference from a predetermined mobile terminal apparatus and information about the predetermined mobile terminal apparatus.

9. The radio base station apparatus of claim 8, wherein, when the predetermined mobile terminal apparatus is a mobile terminal apparatus of smallest interference which influence is smallest, the scheduler sets the mobile terminal apparatus of smallest interference among the mobile terminal apparatuses as the mobile terminal apparatus to perform communication via the direct link.

10. The radio base station apparatus of claim 9, wherein, when the predetermined mobile terminal apparatus is a mobile terminal apparatus of largest interference which influence is largest, the scheduler sets a mobile terminal apparatus other than the mobile terminal apparatus of largest interference among the mobile terminal apparatuses as the mobile terminal apparatus to perform communication via the direct link.

11. A radio communication method comprising the steps of:

in a radio relay station apparatus,

measuring channel quality of each of a plurality of mobile terminal apparatuses, calculating a channel quality reduction value to reduce for the mobile terminal apparatus due to interference from other mobile terminal apparatuses and selecting a predetermined mobile terminal apparatus from the other mobile terminal apparatuses; and
transmitting feedback signal information including the channel quality reduction value, information of the predetermined mobile terminal apparatus selected and information of the channel quality of the mobile terminal apparatuses to a radio base station apparatus; and

in the radio base station apparatus,

measuring channel quality of each of a plurality of mobile terminal apparatuses, and generating radio base station side channel quality information for the mobile terminal apparatus in consideration of interference from other mobile terminal apparatuses;
selecting a mobile terminal apparatus to perform communication via a direct link and a mobile terminal apparatus to perform communication via a relay link based on the feedback signal information and the radio base station side channel quality information and generating scheduling information; and
transmitting the scheduling information to the radio relay station apparatus.

FIG. 1

EP 2 651 159 A1

FIG. 2

FIG. 3

$$f(x, y) = x - 10\log_{10}\left(10^{y/10} + 1\right)$$

EXAMPLE

FIG. 4

UE#3

| RELAYED LINK | CQI$_{RN}$ |
|---|---|
| UE1 | 9 |
| UE2 | 3 |
| UE3 | 17 |

RN

DeNB

| DIRECT LINK | CQI$_{DeNB}$ |
|---|---|
| UE1 | 7 |
| UE2 | 15 |
| UE3 | 5 |

UE#1

UE#2

FIG. 5

| DIRECT LINK | $CQI_{DeNB}$ |
|---|---|
| UE1 | 7 |
| UE2 | $15 \rightarrow f(15,5) = 9$ |
| UE3 | 5 |

INTERFERE

| RELAYED LINK | $CQI_{RN}$ |
|---|---|
| UE1 | 9 |
| UE2 | 3 |
| UE3 | $17 \rightarrow f(17,3) = 12$ |

INTERFERE

FIG. 6

EP 2 651 159 A1

FIG. 7

UE#3

$f_5$

DeNB

RN

UE#1

UE#2

| RELAYED LINK | RBI | $CQI_{RN}$ |
|:---:|:---:|:---:|
| UE1 | $f_5$ | 12 |
| UE2 | | |
| UE3 | | |

| DIRECT LINK | $CQI_{DeNB}$ |
|:---:|:---:|
| UE1 | 7 |
| UE2 | 15 |
| UE3 | 5 |

FIG. 8

UE#3

DeNB

$f_7$

RN

UE#1

UE#2

| RELAYED LINK | RBI | $CQI_{RN}$ |
|---|---|---|
| UE1 | $f_5$ | 12 |
| UE2 | $f_7$ | 6 |
| UE3 | | |

| DIRECT LINK | $CQI_{DeNB}$ |
|---|---|
| UE1 | 7 |
| UE2 | 15 |
| UE3 | 5 |

FIG. 9

| DIRECT LINK | $CQi_{DeNB}$ |
|---|---|
| UE1 | 7 |
| UE2 | 15 |
| UE3 | 5 |

| RELAYED LINK | RBI | $CQi_{RN}$ |
|---|---|---|
| UE1 | $f_5$ | 12 |
| UE2 | $f_7$ | 6 |
| UE3 | $f_3$ | 20 |

FIG. 10

| DIRECT LINK | $CQI_{DeNB}$ |
|---|---|
| UE1 | 7 |
| UE2 | $15 \rightarrow f(15,5) = 9$ |
| UE3 | 5 |

INTERFERE

| RELAYED LINK | RBI | $CQI_{RN}$ |
|---|---|---|
| UE1 | $f_5$ | 12 |
| UE2 | $f_7$ | 6 |
| UE3 | $f_3$ | $20 \rightarrow f(20,6) = 13$ |

INTERFERE

FIG. 11

EP 2 651 159 A1

EXAMPLE FOR UE#1

| RELAYED LINK | RBI | $CQI_{RN}$ | UE OF SMALLEST INTERFERENCE | $\Delta CQI_{RN}$ |
|---|---|---|---|---|
| UE1 | $f_5$ | 12 → 11 | UE3 | −1 |
| UE2 | $f_7$ | 6 → 4 | UE3 | −2 |
| UE3 | $f_3$ | 20 → 19 | UE2 | −1 |

| DIRECT LINK | $CQI_{DeNB}$ |
|---|---|
| UE1 | 7 |
| UE2 | 15 → f (15,5) = 9 |
| UE3 | 5 |

FIG. 12

EXAMPLE FOR UE#1

| RELAYED LINK | RBI | $CQI_{RN}$ | UE OF LARGEST INTERFERENCE | $\Delta CQI_{RN}$ |
|---|---|---|---|---|
| UE1 | $f_5$ | 12 → 9 | UE2 | −3 |
| UE2 | $f_7$ | 6 → 3 | UE1 | −3 |
| UE3 | $f_3$ | 20 → 18 | UE1 | −2 |

| DIRECT LINK | $CQI_{DeNB}$ |
|---|---|
| UE1 | 7 |
| UE2 | 15 → f (15,5) = 9 |
| UE3 | 5 |

FIG. 13

FIG. 14

FIG. 15

EP 2 651 159 A1

| | | |
|---|---|---|
| **INTERNATIONAL SEARCH REPORT** | | International application No. |
| | | PCT/JP2011/078579 |

**A. CLASSIFICATION OF SUBJECT MATTER**
*H04W24/10*(2009.01)i, *H04W16/26*(2009.01)i, *H04W16/28*(2009.01)i, *H04W72/12*(2009.01)i

According to International Patent Classification (IPC) or to both national classification and IPC

**B. FIELDS SEARCHED**

Minimum documentation searched (classification system followed by classification symbols)
H04W4/00-99/00

Documentation searched other than minimum documentation to the extent that such documents are included in the fields searched
Jitsuyo Shinan Koho          1922-1996   Jitsuyo Shinan Toroku Koho   1996-2011
Kokai Jitsuyo Shinan Koho    1971-2011   Toroku Jitsuyo Shinan Koho   1994-2011

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2010/131488 A1  (Panasonic Corp.), 18 November 2010 (18.11.2010), abstract (Family: none) | 1-11 |
| A | JP 2010-50852 A  (Kyocera Corp.), 04 March 2010 (04.03.2010), abstract; claims & WO 2010/024206 A1 | 1-11 |
| A | Research In Motion, Limited., L2 Relay Interference Mitigation, 3GPP TSG RAN WG1 Meeting #56 R1-090575, 2009.02.13 | 1-11 |

☒  Further documents are listed in the continuation of Box C.          ☐  See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 28 December, 2011 (28.12.11) | 17 January, 2012 (17.01.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

<table>
<tr><td colspan="2">International application No.</td></tr>
<tr><td colspan="2">PCT/JP2011/078579</td></tr>
</table>

C (Continuation).    DOCUMENTS CONSIDERED TO BE RELEVANT

| Category* | Citation of document, with indication, where appropriate, of the relevant passages | Relevant to claim No. |
|---|---|---|
| P,A | WO 2011/111113 A1  (Fujitsu Ltd.),<br>15 September 2011 (15.09.2011),<br>abstract<br>(Family: none) | 1-11 |
| P,A | JP 2011-82979 A  (Research In Motion Ltd.),<br>21 April 2011 (21.04.2011),<br>entire text<br>& AU 2010226930 A       & KR 10-2011-0036692 A | 1-11 |

Form PCT/ISA/210 (continuation of second sheet) (July 2009)

**EP 2 651 159 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2010276183 A